# EUROPÄISCHE PATENTSCHRIFT

(11) **EP 2 739 928 B1**
(45) Veröffentlichungstag und Bekanntmachung des Hinweises auf die Patenterteilung: **06.04.2016**
(21) Anmeldenummer: 12741317.7
(22) Anmeldetag: 26.07.2012
(51) Int. Cl.: F28D 9/00, F28F 9/00, F28F 9/007, F02B 29/04

(54) **WÄRMETAUSCHERANORDNUNG**
HEAT EXCHANGER ASSEMBLY
SYSTÈME ÉCHANGEUR DE CHALEUR

(30) Priorität: 05.08.2011 DE 102011080474
(43) Veröffentlichungstag der Anmeldung: 11.06.2014
(73) Patentinhaber: Mahle International GmbH, 70376 Stuttgart (DE); MAHLE Behr GmbH & Co. KG, 70469 Stuttgart (DE)
(72) Erfinder: BRUGGESSER, Veit, 71157 Hildrizhausen (DE); EILEMANN, Andreas, 71729 Erdmannhausen (DE); GRASS, Uwe, 70569 Stuttgart (DE); MÜLLER, Rolf, 71711 Steinheim/Murr (DE); POMIN, Hubert, 71069 Sindelfingen (DE); SAUMWEBER, Christian, 70378 Stuttgart (DE); STEHLIG, Jürgen, 72654 Neckartenzlingen (DE)
(74) Vertreter: BRP Renaud & Partner mbB Rechtsanwälte Patentanwälte Steuerberater
(86) Internationale Anmeldenummer: PCT/EP2012/064739
(87) Internationale Veröffentlichungsnummer: WO 2013/020826

(56) Entgegenhaltungen:
- EP-B1- 2 014 892
- WO-A2-02/18758
- DE-A1- 4 313 505
- FR-A1- 2 886 390
- US-A- 4 058 980

## Beschreibung

Die vorliegende Erfindung betrifft eine Wärmetauscheranordnung mit einem Ladeluftkühler und einem diesen umgebenden Gehäuse gemäß dem Oberbegriff des Anspruchs 1. DE 4 313 505 A1 beschreibt eine derartige Wärmetauscheranordnung.

Aus der EP 2 014 892 B1 ist eine Wärmetauscheranordnung mit einem Ladeluftkühler und einem diesen umgebenden Gehäuse bekannt, wobei das Gehäuse Teil einer Ladeluftleitung ist. Zudem weist das Gehäuse einen Ladelufteinlass, einen Ladeluftauslass und eine Öffnung auf, durch welche der Ladeluftkühler von einer Seite aus in das Gehäuse einsteckbar ist. Auf der der Öffnung gegenüberliegenden Seite des Gehäuse weist dieses eine Ausnehmung auf, die den Ladeluftkühler zumindest teilweise aufnimmt. Das Gehäuse ist dabei vorzugsweise aus Kunststoff ausgebildet.

Aus der DE 43 13 505 A1 ist eine gattungsgemäße Wärmetauscheranordnung mit einem Ladeluftkühler und einem diesen umgebenden Gehäuse bekannt, wobei das Gehäuse Teil einer Ladeluftleitung ist. Das Gehäuse weist auf einer der Öffnung gegenüberliegenden Seite eine Ausnehmung auf, in die der Ladeluftkühler bzw. ein diesen umgebender Metallkäfig eingreift. Im Bereich dieser Ausnehmung ist zwischen dem Ladeluftkühler und dem Gehäuse eine elastische Dichtung angeordnet, die derart ausgebildet ist, dass sie bei Druckpulsationen entstehende Verformungen des Gehäuses und damit Relativbewegungen zwischen dem Ladeluftkühler und dem Gehäuse überbrückt und den Ladeluftkühler in sämtlichen Betriebszuständen dicht mit dem Gehäuse verbindet, wodurch insbesondere eine unerwünschte Bypassströmung vermieden werden kann.

Aus der WO 02/18758 A2 ist ebenfalls eine Wärmetauscheranordnung mit einem Ladeluftkühler bekannt, der in eine Öffnung des Gehäuses einsteckbar ist. Das Gehäuse weist dabei eine gegenüber der Öffnung liegende Ausnehmung auf, in welche der Ladeluftkühler eingreift. Im Bereich dieser Ausnehmung ist zwischen dem Ladeluftkühler und dem Gehäuse eine elastische Dichtung angeordnet, die bei Druckpulsationen entstehenden Verformungen des Gehäuses und damit Relativbewegungen zwischen dem Ladeluftkühler und dem Gehäuse überbrückt und den Ladeluftkühler in sämtlichen Betriebszuständen aller Voraussicht nach dicht mit dem Gehäuse verbindet, wodurch eine unerwünschte Bypassströmung vermieden werden kann.

Aus der FR 2 886 390 A1 sowie aus der US 4,058,980 A sind weitere Wärmetauscheranordnungen bekannt.

Nachteilig beim bekannten Stand der Technik ist, dass es aufgrund von Druckpulsationen in der Ladeluftleitung zu Verformungen des Gehäuses kommen kann, die derart groß sind, dass ein Spalt zwischen dem Ladeluftkühler und dem Gehäuse freigegeben wird und sich dadurch eine unerwünschte, den Ladeluftkühler umgehende Bypassströmung ergibt. Hierdurch wird die Kühlleistung des Ladeluftkühlers reduziert.

Die vorliegende Erfindung beschäftigt sich daher mit dem Problem, für eine Wärmetauscheranordnung der gattungsgemäßen Art eine verbesserte oder zumindest eine alternative Ausführungsform anzugeben, die sich insbesondere durch eine hohe Kühlleistung in allen Betriebszuständen auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen in ein Gehäuse, das Teil einer Ladeluftleitung oder eines Saugrohres ist, hineinragenden Ladeluftkühler derart elastisch gegenüber dem Gehäuse abzudichten, dass die in der Ladeluftleitung auftretenden Druckpulsationen, welche zu Verformungen und insbesondere zu einem Aufblasen des Gehäuses führen können, keine Bypasswege freigeben, die eine unerwünschte Umgehung des Ladeluftkühlers ermöglichen. Das Gehäuse weist dabei in bekannter Weise einen Ladelufteinlass, einen Ladeluftauslass sowie eine Öffnung auf, durch die der Ladeluftkühler von einer Seite aus in das Gehäuse eingesteckt wird. Auf der der Öffnung gegenüberliegenden Seite des Gehäuses ist eine Ausnehmung vorgesehen, in die der Ladeluftkühler eingreift. Im Bereich dieser Ausnehmung zwischen dem Ladeluftkühler und dem Gehäuse ist eine elastische Dichtung angeordnet, die wie oben erwähnt derart ausgebildet ist, dass sie die bei Druckpulsationen entstehenden Verformungen des Gehäuses und damit Relativbewegungen zwischen dem Ladeluftkühler und dem Gehäuse überbrückt und den Ladeluftkühler in sämtlichen Betriebszuständen dicht mit dem Gehäuse verbindet und dadurch eine unverwünschte Bypassströmung und verbunden damit auch eine Herabsetzung der Kühlleistung verhindert. Durch die elastische Dichtung zwischen dem Ladeluftkühler einerseits und dem Gehäuse andererseits ist somit unabhängig von dem Betriebszustand des an das Gehäuse angeschlossenen Verbrennungsmotors und auch unabhängig von den auftretenden Druckpulsationen eine zuverlässige Durchströmung des Ladeluftkühlers und damit eine ausreichende Kühlleistung gewährleistet. Erfindungsgemäß ist die Dichtung am Gehäuse angespritzt. Ein derartiges Anspritzen der Dichtung an das Gehäuse vereinfacht zum Einen die Herstellung und Fertigung der erfindungsgemäßen Dichtung und gewährleistet zum Anderen einen sicheren Sitz der Dichtung zumindest im Bezug auf das Gehäuse. Darüber hinaus entfällt bei einer derartigen angespritzten Dichtung ein zusätzlicher Montageschritt, nämlich das Einlegen einer separaten Dichtung, so dass die Montage vereinfacht und dadurch die Herstellungskosten gesenkt werden können. Hierbei kann die Dichtung aus einem gesonderten Werkstoff mit geeigneten Dichtungseigenschaften gebildet sein, oder aus dem gleichen Material, wie das Gehäuse bestehen. Hierbei kann die Dichtung als angeformte Dichtung bzw. Dichtlippe bei der Herstellung des Gehäuses mitgefertigt werden.

Bei einer vorteilhaften Weiterbildung der erfindungsgemäßen Lösung, ist die Dichtung als O-Ringdichtung, als Labyrinthdichtung oder als Dichtlippe ausgebildet. Bereits diese Aufzählung lässt erahnen, wie vielfältig die gemäß der Erfindung verwendete Dichtung sein kann, wobei es einzig und allein darauf ankommt, den Ladeluftkühler in allen Betriebszuständen gegenüber dem Gehäuse abzudichten und dadurch die unverwünschte Bypassströmung, die die Kühlleistung herabsetzt, zu vermeiden.

Bei einer erfindungsgemäßen Ausgestaltung verfügt das Gehäuse im Bereich der Ausnehmung über einen Durchbruch. Durch diesen Durchbruch kann das zwischen dem Ladeluftkühler und dem Gehäuse gebildete Volumen mit der Umgebung korrespondieren. Dies ist insbesondere dann vorteilhaft, wenn zwischen der Dichtung und dem Gehäuse ein Leckageluftstrom in dieses Volumen eindringt. Dieser Leckageluftstrom könnte dazu führen, dass der Ladeluftkühler aus der Ausnehmung ausgepresst wird und sich ein größerer Spalt bildet oder sich Teile deformieren. Durch den Durchbruch kann diese Leckluft in die Umgebung entweichen, ohne Beschädigungen an dem Wärmetauschermodul, insbesondere am

Ladeluftkühler oder Gehäuse zu verursachen. Bei einer Weiterbildung der erfindungsgemäßen Vorrichtung ist der Durchbruch derart ausgeführt, dass im Bereich der Ausnehmung die Wand des Gehäuses vollständig unterbrochen ist und nur ein Dichtrand zur Anlage der Dichtung vorgesehen ist. Somit würde ein Teil des Ladeluftkühlers einen Teil des Gehäuses bilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Schnittdarstellung durch eine erfindungsgemäße Wärmetauscheranordnung,
- Fig. 2a: eine Schnittdarstellung durch eine weitere möglich Ausführungsform der Wärmetauscheranordnung mit geschlossenem Ende,
- Fig. 2b: eine Schnittdarstellung durch eine weitere möglich Ausführungsform der Wärmetauscheranordnung mit offenem Ende,
- Fig. 3: eine Schnittdarstellung durch die Schnittebene A-A.

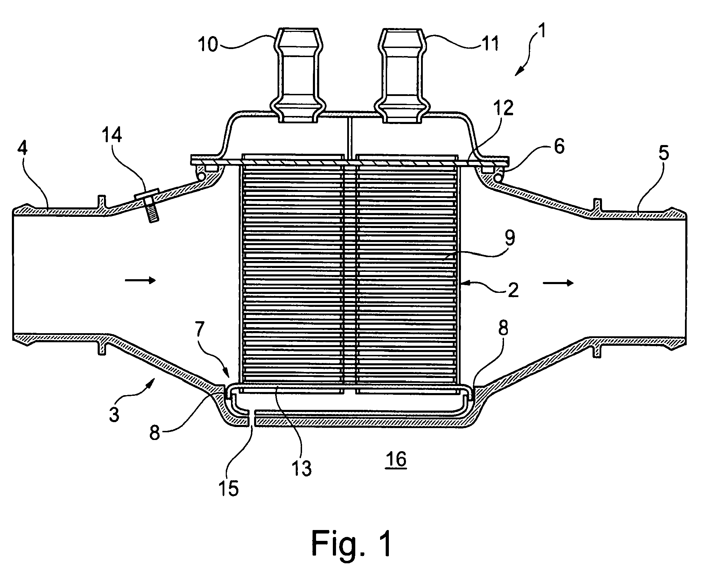

Entsprechend der Fig. 1, weist eine erfindungsgemäße Wärmetauscheranordnung 1 einen Ladeluftkühler 2 und ein diesen umgebendes Gehäuse 3 auf, das Teil einer Ladeluftleitung sein kann. Das Gehäuse 3 weist zudem einen Ladelufteinlass 4, einen Ladeluftauslass 5 sowie eine Öffnung 6 auf, durch die der Ladeluftkühler 2 von einer Seite aus in das Gehäuse 3 einsteckbar ist. Der Öffnung 6 gegenüberliegend weist das Gehäuse 3 eine Ausnehmung 7 auf, in die der Ladeluftkühler 2 eingreift. Bei im Gehäuse 3 auftretenden Druckpulsationen kann es nun vorkommen, dass sich dieses aufbläst und dadurch nach außen verformt, was eine unerwünschte und den Ladeluftkühler 2 umgehende Bypassströmung im Bereich der Ausnehmung 7 bedingen würde. Aus diesem Grund ist erfindungsgemäß im Bereich der Ausnehmung 7 zwischen dem Ladeluftkühler 2 und dem Gehäuse 3 eine elastische Dichtung 8 angeordnet, die derart ausgebildet ist, dass sie die bei Druckpulsationen entstehenden Verformungen des Gehäuses 3 und damit die Relativbewegungen zwischen dem Ladeluftkühler 2 und dem Gehäuse 3 überbrückt und den Ladeluftkühler 2 in sämtlichen Betriebszuständen dicht mit dem Gehäuse 3 verbindet und dadurch die unverwünschte Bypassströmung unterbindet.

Die erfindungsgemäße Dichtung 8 kann beispielsweise als O-Ringdichtung, als Labyrinthdichtung oder als Dichtlippe ausgebildet sein, wobei bereits diese Aufzählung erahnen lässt, dass die Gestaltung der Dichtung 8 nahezu frei wählbar ist, sofern diese lediglich die im Betrieb der Wärmetauscheranordnung 1 auftretenden Relativbewegungen zwischen Ladeluftkühler 2 einerseits und Gehäuse 3 andererseits auszugleichen und zu überbrücken vermag. Das Gehäuse 3 ist dabei vorzugsweise aus Kunststoff ausgebildet, insbesondere wenn dieses Teil eines Saugmoduls einer Brennkraftmaschine ist. Demgegenüber ist der Ladeluftkühler 2 üblicherweise zumindest teilweise aus Metall ausgebildet, insbesondere im Bereich der Wärmeübertragung, also beispielsweise im Bereich von Kühllamellen 9. Dabei kann der Ladeluftkühler 2 fluidgekühlt, als beispielsweise luft- oder kühlmittelgekühlt, insbesondere wassergekühlt, sein und dazu ein Kühlmitteleinlassstutzen 10 sowie einen Kühlmittelauslassstutzen 11 aufweisen. 9

Betrachtet man die Fig. 1, so kann man erkennen, dass der Ladeluftkühler 2 einen Flansch 12 aufweist, über welchen er im Bereich der Öffnung 6 dicht mit dem Gehäuse 3 verbunden ist. Im Bereich der Ausnehmung 7 hingegen weist der Ladeluftkühler 2 eine Flanschplatte 13 mit einem umgebogenen Rand auf, der sich dicht an die Dichtung 8 anlegt.

Zur Vereinfachung des Herstellungsprozesses kann die Dichtung 8 beispielsweise am Gehäuse 3 oder am Ladeluftkühler 2 angespritzt sein, wobei insbesondere das Anspritzen am Gehäuse 3 eine einfache Montage des Ladeluftkühlers 2 ermöglicht. Wie der Fig. 1 zu entnehmen ist, ist die Dichtung 8 in diesem Fall als Radialdichtung ausgebildet.

Generell kann im Bereich des Gehäuses 3 auch ein Über-/Unterdruckventil 14 vorgesehen sein, welches insbesondere einen über einen vordefinierten Grenzwert hinausgehenden Überdruck zur Umgebung hin abbaut. Denkbar ist hierbei auch, dass anstelle des Über-/Unterdruckventils 14 eine Ausgleichsöffnung vorgesehen ist, welche Spitzendrücke abmildert.

Durch die erfindungsgemäß vorgesehene Dichtung 8 ist es somit möglich, eine unerwünschte und die Kühlleistung des Ladeluftkühlers 2 herabsetzende Bypassströmung in allen Betriebszuständen, das heißt insbesondere auch bei Druckpulsationen, die zu einem Aufblasen des Gehäuses 3 führen können, zu vermeiden. Zudem ist eine derartige Dichtung 8 vergleichsweise kostengünstig herstellbar.

Bei einer erfindungsgemäßen Ausgestaltung verfügt das Gehäuse 3 im Bereich der Ausnehmung 7 über einen Durchbruch 15. Durch diesen Durchbruch 15 kann das zwischen dem Ladeluftkühler 2 und dem Gehäuse 3 gebildete Volumen mit der Umgebung 16 korrespondieren. Dies ist insbesondere dann vorteilhaft, wenn zwischen der Dichtung 8 und dem Gehäuse 2 ein Leckageluftstrom in dieses Volumen eindringt. Der Leckageluftstrom könnte dazu führen, dass der Ladeluftkühler 2 aus der Ausnehmung 7 ausgepresst wird und sich ein größerer Spalt bildet oder sich Teile deformieren. Durch den Durchbruch 15 kann diese Leckageluft in die Umgebung 16 entweichen, ohne Beschädigungen an der Wärmetauscheranordnung 1, insbesondere am Ladeluftkühler 2 oder am Gehäuse 3, zu verursachen.

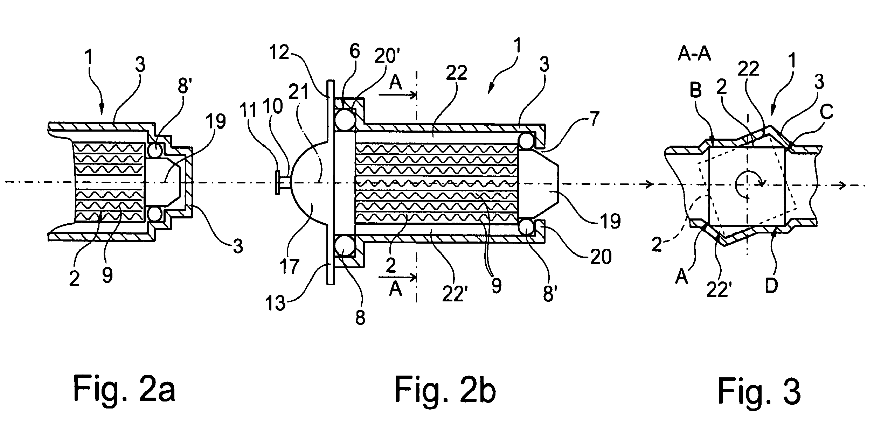

In den Fig. 2a,b ist eine weitere Wärmetauscheranordnung 1 gezeigt, die einen ebenfalls in ein Gehäuse 3 einsteckbaren Ladeluftkühler 2 aufweist. Die Strömungsrichtung der zu kühlenden Ladeluft innerhalb des Gehäuses 3 verläuft dabei senkrechet zur Bildebene. Der Ladeluftkühler 2 wird im vorliegenden Fall von der linken Seite aus in das Gehäuse 3 eingeschoben bis die Dichtungen 8,8' den Ladeluftkühler 2 gegen das Gehäuse 3 abdichten. Das Gehäuse 3 der Wärmetauscheranordnung 1 ist dabei gemäß der Fig. 2a im Bereich eines Umlenktanks 19 geschlossen, kann aber auch offen sein, wie dies gem. der Fig. 2a dargestellt ist.

Der Ladeluftkühler 2 ist dabei wie folgt aufgebaut: Links besitzt er einen Kühlmitteleinlassstutzen 10 sowie einen Kühlmittelauslassstutzen 11, die in der Zeichnung hintereinander liegen. Daran anschließend ist ein erster Kühlmitteltank 17 vorgesehen, über welchen das Kühlmittel in den eigentlichen Ladeluftkühler 2 bzw. in die Lamellen 9 strömt. Rechts schließt sich der Umlenktank 19 an, der eine Umlenkung der Kühlmittelströmung um 180° bewirkt. Der Bereich der Lamellen 18 ist dabei im Querschnitt quadratisch, wogegen der Ladeluftkühler 2 im Bereich der Dichtungen 8 und 8' einen runden Querschnitt aufweist. Die Dichtungen 8, 8' können somit als O-Ringdichtungen ausgebildet sein. Eine Diagonale des quadratischen Lamellenbereichs 9 ist dabei maximal so groß wie ein Außendurchmesser der Dichtung 8'. Auch kann eine Querschnittsform der Dichtungen 8,8' so ausgebildet sein, dass sich diese, insbesondere mit nicht gezeigten Dichtlippen, unter Druck an das Gehäuse 3 anlegen. Als Werkstoff für derartige Dichtungen 8,8' kommen insbesondere Zweikomponentenwerkstoffe in Frage.

Der Einbau des Ladeluftkühlers 2 erfolgt dabei wie folgt: Zunächst wird der Ladeluftkühler 2 in das Gehäuse 3 eingeschoben und zwar so weit, bis die Dichtung 8' axial an einen Rand 20 des Gehäuses 3 anstößt und die Dichtung 8 an einem Rand 20'. In diesem Zustand liegt der Flansch 12 bzw. die Flanschplatte 13 am Gehäuse 3 an. Die Dichtung 8 besitzt dabei einen größeren Durchmesser als die Dichtung 8'. An schließend wird der Ladeluftkühler 2 um seine Längsachse 21 gedreht, beispielsweise um 10-15°, wodurch sich die Lamellen 9 ebenfalls drehen und in diesem gedrehten Zustand einen bislang oberen und unteren Raum 22,22' belegen, so dass hier keine unerwünschte und die Lamellen 9 umgehende Bypassströmung erfolgen kann. Die Darstellung in Fig. 2b und in Fig. 3 (gestrichelte Linie) zeigt den Ladeluftkühler 2 vor dem Verdrehen.

In der Schnittdarstellung in Fig. 3 ist erkennbar, dass der zunächst schräg eingeschobene Ladeluftkühler 2 zum endgültigen Einbau im Uhrzeigersinn um ca. 15-20 verdreht wird. In dieser Endstellung, die mit durchgezogener Linie dargestellt ist, ist somit eine Bypassströmung über die Räume 22,22' nicht mehr möglich, so dass der Ladeluftstrom ausschließlich durch den Ladeluftkühler 2 geführt wird. Im Unterschied zu bisher bekannten Wärmetauscheranordnungen wird somit der Ladeluftkühler 2 nicht mehr nur eingeschoben, sondern anschließend von der Montageposition (schräg) in die Endposition verdreht. Hierdurch kann eine Steckdrehverbindung in der Art eines Bajonettverschlusses realisiert werden. Nach Erreichen der Endposition kann der Flansch 12 beispielsweise einrasten.

Die Dichtungen 8,8' sind dabei kunststoffgerecht ausgeführt und ermöglichen zusätzlich zur Dichtfunktion auch eine Lagerfunktion beim verdrehen des Ladeluftkühlers 2 zum Erreichen der Endposition. Die Dichtungen 8,8' dichten insbesondere die kritischen Stellen A, B, C und D ab.

Zu Fixierung des Ladeluftkühlers 2 im Gehäuse 3 kann in vorteilhafter Weise ein Clipverschluss oder ein Bajonettverschluss vorgesehen sein. Besonders letzterer erleichtert die Montage und Demontage des Ladeluftkühlers 2 erheblich und sichert diesen zugleich in eingebautem Zustand. Selbstverständlich ist auch eine Verschraubung oder eine Verschweißung des Ladeluftkühlers 2 mit dem Gehäuse 3 denkbar. Bei der erfindungsgemäßen Ausbildung des Ladeluftkühlers 2 reduzieren sich insbesondere die auf den Ladeluftkühler 2 einwirkenden Kräfte, insbesondere Flanschkräfte, da mittels der beiden Dichtungen 8,8' eine schwimmende Lagerung erreicht werden kann. Die Dichtungen 8,8' wirken dabei in Radialrichtung, aber auch in Axialrichtung.

Der Ladeluftkühler 2 ist vorzugsweise aus Leichtmetall, insbesondere aus Aluminium ausgebildet.

## Patentansprüche

1. Wärmetauscheranordnung (1) mit einem Ladeluftkühler (2) und einem diesen umgebenden Gehäuse (3), das Teil einer Ladeluftleitung ist, wobei
- das Gehäuse (3) einen Ladelufteinlass (4), einen Ladeluftauslass (5) und eine Öffnung (6) aufweist, durch welche der Ladeluftkühler (2) von einer Seite aus in das Gehäuse (3) einsteckbar ist,
- das Gehäuse (3) auf der der Öffnung (6) gegenüberliegenden Seite eine Ausnehmung (7) aufweist, in die der Ladeluftkühler (2) eingreift,
- im Bereich der Ausnehmung (7) zwischen dem Ladeluftkühler (2) und dem Gehäuse (3) eine elastische Dichtung (8) angeordnet ist, die derart ausgebildet ist, dass sie die bei Druckpulsationen entstehenden Verformungen des Gehäuses (3) und damit Relativbewegungen zwischen dem Ladeluftkühler (2) und dem Gehäuse (3) überbrückt und den Ladeluftkühler (2) in sämtlichen Betriebszuständen dicht mit dem Gehäuse (3) verbindet und dadurch eine unerwünschte Bypassströmung unterbindet,
**dadurch gekennzeichnet, dass**
die Dichtung (8) am Gehäuse (3) angespritzt ist.

2. Wärmetauscheranordnung nach Anspruch 1,
**dadurch gekennzeichnet,**
**dass** die Dichtung (8) als O-Ringdichtung, als Labyrinthdichtung oder als Dichtlippe ausgebildet ist.

3. Wärmetauscheranordnung nach Anspruch 1 oder 2,
**dadurch gekennzeichnet,**
**dass** das Gehäuse (3) aus Kunststoff ausgebildet ist.

4. Wärmetauscheranordnung nach einem der Ansprüche 1 bis 3,
**dadurch gekennzeichnet,**
**dass** der Ladeluftkühler (2) luft- oder kühlmittelgekühlt, insbesondere wassergekühlt, ist.

5. Wärmetauscheranordnung nach einem der Ansprüche 1 bis 4,
**dadurch gekennzeichnet,**
**dass** der Ladeluftkühler (2) einen Flansch (12) aufweist, über welchen er im Bereich der Öffnung (6) dicht mit dem Gehäuse (3) verbunden ist.

6. Wärmetauscheranordnung nach einem der Ansprüche 1 bis 5,
**dadurch gekennzeichnet,**
**dass** das Gehäuse (3) Teil eines Saugmoduls einer Brennkraftmaschine ist.

7. Wärmetauscheranordnung nach einem der Ansprüche 1 bis 6,
**dadurch gekennzeichnet,**
**dass** die Dichtung (8) als Radialdichtung ausgebildet ist.

8. Wärmetauscheranordnung nach einem der Ansprüche 1 bis 7,
**dadurch gekennzeichnet,**
**dass** der Ladeluftkühler (2) im Bereich der Ausnehmung (7) eine Flanschplatte (13) mit einem umgebogenen Rand aufweist, der sich dicht an die Dichtung (8) anlegt.

9. Wärmetauscheranordnung nach einem der Ansprüche 1 bis 8,
**dadurch gekennzeichnet,**
**dass** das Gehäuse (3) im Bereich der Ausnehmung (7) zumindest einen Durchbruch (15) aufweist.

## Claims

1. A heat exchanger assembly (1) comprising an intercooler (2) and housing (3) which encloses said intercooler and is part of a charge air line, wherein
- the housing (3) has a charge air inlet (4), a charge air outlet (5) and an opening (6) through which the intercooler (2) can be inserted into the housing (3) from one side,
- the housing (3) has a recess (7) on the side opposite the opening (6), into which recess the intercooler (2) engages,
- an elastic seal (8) is arranged in the region of the recess (7) between the intercooler (2) and the housing (3), which seal is designed such that it bridges the deformation of the housing (3) occurring during pressure pulsations and thus bridges relative movements between the intercooler (2) and the housing (3) and tightly connects the intercooler (2) to the housing (3) in all operating states, and thus prevents an undesirable bypass flow,
**characterized in that**
the seal (8) is injection molded onto the housing (3).

2. The heat exchanger assembly according to claim 1,
**characterized in**
**that** the seal (8) is designed as an O-ring seal, as a labyrinth seal or as a sealing lip.

3. The heat exchanger assembly according to claim 1 or claim 2,
**characterized in**
**that** the housing (3) is formed from plastic.

4. The heat exchanger assembly according to any one of the claims 1 to 3,
**characterized in**
**that** the intercooler (2) is air-cooled or coolant-cooled, in particular water-cooled.

5. The heat exchanger assembly according to any one of the claims 1 to 4,
**characterized in**
**that** the intercooler (2) has a flange (12) via which it is tightly connected to the housing (3) in the region of the opening (6).

6. The heat exchanger assembly according to any one of the claims 1 to 5,
**characterized in**
**that** the housing (3) is part of an intake module of an internal combustion engine.

7. The heat exchanger assembly according to any one of the claims 1 to 6,
**characterized in**
**that** the seal (8) is designed as a radial seal.

8. The heat exchanger assembly according to any one of the claims 1 to 7,
**characterized in**
**that** in the region of the recess (7), the intercooler (2) has a flange plate (13) with a bent edge which rests tightly against the seal (8).

9. The heat exchanger assembly according to any one of the claims 1 to 8,
**characterized in**
**that** the housing (3) has at least one aperture (15) in the region of the recess (7).

## Revendications

1. Dispositif d'échangeur thermique (1) comportant un refroidisseur d'air de charge (2) et un logement (3) entourant ce dernier, qui est une partie d'une conduite d'air de charge, dans lequel
- le logement (3) présente une admission d'air de charge (4), un échappement d'air de charge (5) et une ouverture (6), à travers laquelle le refroidisseur d'air de charge (2) peut être enfiché à partir d'un côté dans le logement (3),
- le logement (3) présente sur le côté opposé à l'ouverture (6) un évidement (7), dans lequel s'engage le refroidisseur d'air de charge (2),
- au niveau du logement (7) entre le refroidisseur d'air de charge (2) et le logement (3) un joint d'étanchéité élastique (8) est disposé, qui est conçu de telle sorte que il surmonte les déformations du logement générées par des pulsations de pression et donc les mouvements relatifs entre le refroidisseur d'air de charge (2) et le logement (3) et relie le refroidisseur d'air de charge (2) dans tous les états de fonctionnement de manière étanche au logement (3) et empêche ainsi un écoulement de déviation indésiré,
**caractérisé en ce que**
le joint d'étanchéité (8) est moulé par injection sur le logement (3).

2. Dispositif d'échangeur thermique selon la revendication 1,
**caractérisé en ce que**
le joint d'étanchéité (8) est conçu comme un joint torique annulaire, comme un joint à labyrinthe ou comme une lèvre d'étanchéité.

3. Dispositif d'échangeur thermique selon la revendication 1 ou 2,
**caractérisé en ce que**
le logement (3) est réalisé en plastique.

4. Dispositif d'échangeur thermique selon une des revendications 1 à 3,
**caractérisé en ce que**
le refroidisseur d'air de charge (2) est refroidi par de l'air ou un milieu de refroidissement, notamment refroidi à l'eau.

5. Dispositif d'échangeur thermique selon une des revendications 1 à 4,
**caractérisé en ce que**
le refroidisseur d'air de charge (2) présente une bride (12), par l'intermédiaire de laquelle il est relié au niveau de l'ouverture (6) de manière étanche au logement (3).

6. Dispositif d'échangeur thermique selon une des revendications 1 à 5,
**caractérisé en ce que**
le logement (3) est une partie d'un module d'aspiration d'un moteur à combustion interne.

7. Dispositif d'échangeur thermique selon une des revendications 1 à 6,
**caractérisé en ce que**
le joint d'étanchéité (8) est conçu comme un joint d'étanchéité radial.

8. Dispositif d'échangeur thermique selon une des revendications 1 à 7,
**caractérisé en ce que**
le refroidisseur d'air de charge (2) présente au niveau de l'évidement (7) une plaque de bride (13) avec un bord recourbé, qui vient reposer de manière étanche sur le joint d'étanchéité (8).

9. Dispositif d'échangeur thermique selon une des revendications 1 à 8,
**caractérisé en ce que**
le logement (3) présente au niveau de l'évidement (7) au moins une percée (15).
